# EUROPÄISCHE PATENTSCHRIFT

(11) **EP 0 448 507 B1**
(45) Veröffentlichungstag und Bekanntmachung des Hinweises auf die Patenterteilung: **06.12.1995**
(21) Anmeldenummer: 91810092.6
(22) Anmeldetag: 08.02.1991
(51) Int. Cl.: G06K 17/00

(54) **Kontaktlose Uebertragung von Identifikationssignalen**
Contactless transmission of identification signals
Transmission sans contact de signaux d'identification

(30) Priorität: 19.03.1990 CH 889/90
(43) Veröffentlichungstag der Anmeldung: 25.09.1991
(73) Patentinhaber: Bauer Kaba AG, CH-8620 Wetzikon (CH)
(72) Erfinder: Graf, Ulrich, CH-8405 Winterthur (CH); Locher, Johann, CH-8620 Wetzikon (CH)
(74) Vertreter: Frei, Alexandra Sarah

(56) Entgegenhaltungen:
- WO-A-89/01671
- FR-A- 2 636 153
- GB-A- 2 158 870
- PATENT ABSTRACTS OF JAPAN vol. 12, no. 178 (P-708)(3025) 26. Mai 1988

## Beschreibung

Die Erfindung liegt auf dem Gebiete der Schliess- und Sicherheitstechnik und betrifft ein Verfahren und eine Vorrichtung gemäss dem Oberbegriff der unabhängigen Patentansprüche, mit denen die Reichweite der kontaktlosen Übertragung von Identifikationssignalen von normierten Identifikationsträgern erweitert werden kann.

Die kontaktlose Übertragung von Identifikationssignalen durch einen Chip, der neben der einprogrammierten Identifikationsinformation auch Mittel besitzt, diese Information auszusenden, entspricht dem Stande der Technik. Solche Chips werden beispielsweise in der C2-Card (Contactless Inductive Chip Card), eine Gemeinschaftsentwicklung von ADE, Valvo und ZEISS-Ikon, verwendet und sind zu einem relativ gut verbreiteten Standard entwickelt worden. Die Mass-Norm entspricht dem ISO Kreditkartenformat 7816. Sobald solch ein Chip in den Bereich eines entsprechenden, stationären Sender/Empfängers (Lesegerät) gebracht wird, wird er zum Aussenden der Identifikationssignale angeregt, die vom stationären Empfänger empfangen und entsprechend weiterverarbeitet oder weitergeleitet werden.

Die Reichweite einer solchen kontaktlosen Übertragung von Identifikationssignalen durch einen Chip beträgt etwa 10mm. Das heisst mit anderen Worten, für eine Identifikationsübertragung muss die Chip-tragende Karte oder der Chip-tragende Schlüssel sehr nahe an den entsprechenden Empfänger bewegt werden, also eigentlich wie eine Karte mit nur magnetischen und optischen Identifikationen in einen Schlitz oder wie ein gewöhnlicher Schlüssel in einen Schlüsselkanal gesteckt werden.

Es gibt nun aber viele Fälle, wo eine Identifikation notwendig ist, wo es aber vorteilhaft und bequem wäre, wenn diese nicht auf eine derart kleine Distanz zwischen Identifikations-Sender und Identifikations-Empfänger angewiesen wäre. Entsprechende Anwendungen würden an vielen Orten eingesetzt werden können, bspw. zum automatischen Oeffnen von Türen, wenn der Identifikationsträger sich darauf zu bewegt (ohne das bekannte mühsame Einschieben von Schlüssel oder Karte in eine dafür vorgesehene Apparatur) oder das Oeffnen von Schranken wie beispielsweise Schranken von Parkhäusern und vieles andere mehr.

Eine Erweiterung der Reichweite ist auf der Chip-tragenden Karte oder auf dem Chip-tragenden Schlüssel nicht ohne weiteres oder nur mit erheblichem Aufwand möglich, da dafür eine Energiequelle, bspw. eine Batterie oder Sonnenzelle, und eine Antenne mit grösserer Reichweite notwendig wäre, die in der Karte oder dem Schlüssel aus räumlichen Gründen nicht mehr untergebracht werden können ohne die gesamte Technologie zu ändern. Grössere Identifikationsträger mit eingebauter Energiequelle, die eine grössere Reichweite haben könnten, sind durchaus machbar, aber sie sprengen den Rahmen der Normierung und können deswegen nicht mehr überall eingesetzt werden (Beispiel: Sender plus Magnetspur plus evtl. Barcode in einer Vielzweckkarte), da sie dann mit den anderen, der Norm entsprechenden Geräten nicht mehr zusammenarbeiten. Somit sind solche grösseren Identifikationsträger für die normierten Kurzdistanz-Lesegeräte nicht brauchbar und würden die Anzahl notwendiger Idnetifikationsträger in einem Identifikationssystem zudem unnötig erhöhen.

Aus der FR-A-2 636 153 ist eine andere Auswendung bekannt mit einer Chipkarte als abbruchbarem Zahlungsmittel, einer Zahlungsstation und einer mobilen Lesestation, von welcher eine Informationsübertragung mittels OR-Strahlung auf die Zahlungsstation erfolgt. Dies ergibt jedoch auch keine Lösung der nachfolgenden Aufgabe.

Es ist nun Aufgabe der Erfindung, ein Verfahren aufzuzeigen und eine Vorrichtung zu schaffen, die es erlauben, die Reichweite der kontaktlosen Identifikationsübertragung von einem normierten, Chip-tragenden Identifikationsträger zu erhöhen, ohne dass dadurch die Brauchbarkeit des Identifikaionsträgers für normierte Kurzdistanz-Lesegeräte beeinträchtigt wird. Die Reichweite soll bspw. auf 2m bis 10m, also um einen Faktor von mindestens 200 erhöhbar sein. Die Anwendung solcher Chip-tragender Identifikationsträger soll auch auf eine weitere Palette von Lesegeräten anwendbar sein.

Diese Aufgabe wird gelöst durch das Verfahren und die Vorrichtung gemäss den kennzeichnenden Teilen der unabhängigen Patentansprüche. Die folgenden Figuren unterstützen die nachfolgende detaillierte Beschreibung des erfindungsgemässen Verfahrens und der erfindungsgemäsen Vorrichtung. Dabei zeigt
- **Fig. 1**: das Verfahrensschema des Verfahrens gemäss dem Stande der Technik und des erfindungsgemässen Verfahrens,
- **Fig. 2**: eine beispielhafte Ausführungsform der erfindungsgemässen Vorrichtung mit einer Chip-tragenden Kreditkarte als Subsystem,
- **Fig. 3**: eine beispielhafte Ausführungsform der erfindungsgmässen Vorrichtung mit einem Chip-tragenden Schlüssel als Subsystem.

Das erfindungsgemässe Verfahren besteht prinzipiell darin, eine Art Relaisstation zu benutzen, um die Signale des Identifikations-Chips zu empfangen und mittels eines Senders mit grösserer Reichweite wieder auszustrahlen, damit sie von einem entferntern Lesegerät empfangen werden können.

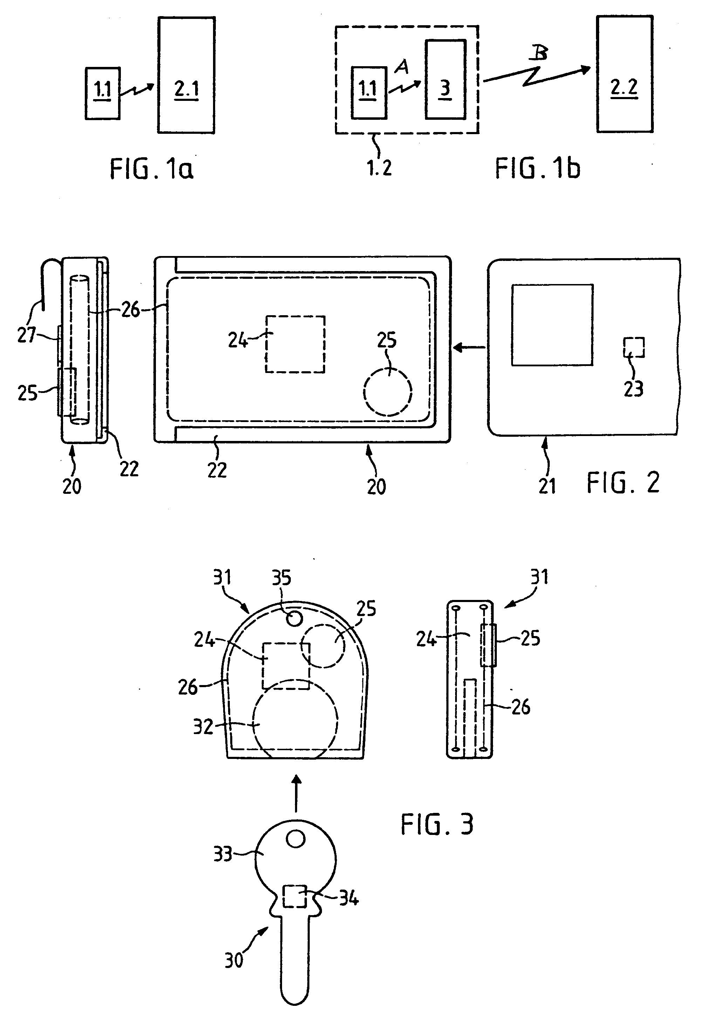

Die **Figuren 1a und 1b** zeigen als Vergleich ein Verfahrensschema für die kontaktlose Identifikations-Übertragung gemäss dem Stande der Technik (Fig. 1 a) und ein Verfahrensschema des erfindungsgemässen Verfahrens (Fig. 1 b). Gemäss dem Stande der Technik sendet ein Identifikationsträger 1.1 Identifikationssignale A aus, die von einem Lesegerät 2.1 empfangen und weiterverarbeitet, rsp. interpretiert werden. Da der Identifikationsträger 1.1 ein durch Kriterien der Handhabung und der Normierung beschränktes System darstellt, ist insbesondere seine Sende-Reichweite beschränkt. Zudem sind die Signale A nicht varierbar, das heisst, jedes Lesegerät 2.1, für das der Identifikationsträger 1.1 anwendbar sein soll, muss die Signale A nicht nur empfangen, sondern auch "verstehen" können.

Das erfindungsgemässe Verfahren verwendet ein System "Identifikationsträger mit erhöhter Reichweite" 1.2 (Fig. 1b), das aus einem normierten Identifikationsträger 1.1 als Subsystem und einer Relaisstation 3 besteht. Die Relaisstation 3 hat einerseits die Funktion des Lesegerätes 2.1 aus Fig. 1a, das heisst sie empfängt die Identifikationssignale A des Identifikationsträgers 1.1. Andererseits sendet sie mit einem leistungsfähigeren Sender die entsprechenden Signale B aus, die von einem Lesegerät 2.2 empfangen, rsp. interpretiert werden. Je nach Anwendung entsprechen die Signale B in bezug auf ihren Inhalt den empfangenen Signalen A, oder aber die Relaisstation 3 decodiert die Signale A zusätzlich gemäss den Anforderungen des Lesegerätes 2.2, das heisst sie übersetzt sie in die Sprache des Lesegerätes 2.2 und die Signale B sind dann spezifische Identifikationssignale für das Lesegerät 2.2.

Das erfindungsgemässe Verfahren verwendet also die Idnetifikationssignale A eines normierten Identifikationsträgers 1.1 mit kleiner Reichweite und sendet Identifikationssignale B über eine erhöhte Reichweite aus, wobei zusätzlich die Identifikationssignale B für ein spezifisches Lesegerät decodiert sein können. Diese Möglichkeit der Decodierung der vom normierten Identifikationsträger (1.1) gelieferten Identifikation bringt zum Vorteil der erweiterten Reichweite den Vorteil der erweiterten Anwendungsmöglichkeiten auch auf Lesegeräte, die die Identifikationsinformation des normierten Identifikationsträgers an sich nicht "verstehen".

Das System "Identifikationsträger mit erhöhter Reichweite" 1.2 umfasst also einen Identifikations-abhängigen Teil und einen Lesegerät-abhängigen Teil. Aus diesem Grunde und auch, weil der normierte Identifikationsträger 1.1 neben seiner Funktion als Subsystem des Systems 1.2 gleichzeitig seine Funktion als System 1.1 wahrnehmen soll, ist es vorteilhaft, Identifikationsträger 1.1 und Relaisstation 3 nur lose miteinander zu verbinden, damit sie auswechselbar sind. Dann ist es möglich, den Identifikationsträger 1.1 der zu identifizierenden Person, die Relaisstation 3 aber Örtlichkeiten oder Gegenständen zuzuordnen, die mit der speziellen weitreichenden Identifikation in Verbindung stehen.

Ein Anwendungsbeispiel für das erfindungsgemässe Verfahren betrifft den Zutritt zu einem Gebäude und dem dazugehörenden Parking. Die zu identifizierende Person benutzt eine Identifikationskarte, die sie in ein entsprechendes Lesegerät steckt, für den Zutritt zum Gebäude, während sie für die Zufahrt zum entsprechenden Parkplatz im Auto eine Relaisstation hat, in die sie die gleiche Karte als Subsystem steckt.

Ein weiteres Anwendungsbeispiel sind Personen, die für den Zutritt zu ihrer Arbeitsstelle einen Schlüssel oder eine Identifikationskarte benutzen, während sich ihnen innerhalb der Arbeitsstelle Türen automatisch öffnen, weil sie an ihrer Werkkleidung eine Relaisstation mit dem eingesteckten Schlüssel oder der eingesteckten Karte tragen. Dieses zweite Beispiel lässt sich auch mit dem ersten Beispiel kombinieren und ergibt dann ein System bestehend aus verschiedenen Identifikations-spezifischen Teilen und verschiedenen Lesegerät-spezifischen Teilen.

**Figur 2** zeigt eine beispielhafte Ausführungsform der erfindungsgemässen Vorrichtung bestehend aus einer normierten, Chip-tragenden Kreditkarte und einer entsprechend gestalteten Relaisstation, mit der das beschriebene, erfindungsgemässe Verfahren durchgeführt werden kann. Die Relais-station ist als portable Hülle 20 ausgebildet, in die eine normierte, Chip-tragende Kreditkarte 21, beispielsweise ein als solche ausgebildeter Sichtausweis, derart in entsprechende Einschiebeschlitze 22 eingesteckt werden kann, dass der in der Karte integrierte Chip 23 in Lesedistanz zur Leseelektronik 24 der Relaisstation zu liegen kommt. Die in der Relaisstation notwendigen Funktionselemente sind: Lese-, Decodier- und Sendeelektronik 24, Stromquelle 25 und Antenne 26.

Die Kreditkarte 21, als Identifikations-tragendes Subsystem, wird in die Hülle 20, als Relaisstation, eingeschoben. Die Hülle ist mit Hilfe von Befestigungsmitteln 27, beispielsweise Haken, Klammern oder Ähnliches, an Kleidung, im Auto oder an anderen Gegenständen befestigbar.

**Figur 3** zeigt eine weitere beispielhafte Ausführungsform der erfindungsgemässen Vorrichtung, bestehend aus einem normierten, Chip-tragenden Schlüssel 30 und einer Relaisstation 31, die die Form einer Hülle für den Schlüsselkopf hat. Die Relaisstation 31 trägt dieselben Funktionseinheiten (24, 25 und 26) wie die im Zusammenhang mit der Figur 2 beschriebene Relaisstation 20. Sie hat die Form einer Hülle, durch deren elastisch deformierbaren Einschiebeschlitz 32 der Kopfteil 33 des Schlüssels 30, der den Chip 34 trägt, eingesteckt wird. Für Befestigungszwecke trägt die Relaisstation 31 zum Beispiel ein Loch 35, mit Hilfe dessen sie samt Schlüssel beispielsweise an einem Schlüsselanhänger befestigt werden kann.

Weitere Ausführungsvarianten der erfindungsgemässen Vorrichtung ergeben sich durch Kombination der den beschriebenen Ausführungsformen zu Grunde liegenden Ideen. Beispielsweise kann die im Zusammenhang mit der Figur 2 beschriebene Hülle 20 für eine Kreditkarte als Subsystem derart ausgebildet sein, dass darin ebenfalls ein Schlüssel derart eingesteckt werden kann, dass die von ihm ausgesendeten Identifikationssignale von derselben Elektronik 24 gelesen wird wie die entsprechenden Signale der Karte 21.

## Patentansprüche

1. Verfahren zur Erweiterung der Reichweite und der Anwendungsmöglichkeiten der kontaktlosen Identifikationsübertragung von normierten Identifikationsträgern (1.1) mit kurzer Reichweite auf ein Lesegerät (2.2), in dem die von dem normierten Identifikationsträger (1.1) ausgesendeten Identifikationssignale (A) mit kurzer Reichweite in ein Zwischengerät (3) eingespeist und verstärkt werden, um sie zur Erreichung einer erweiterten Reichweite mit grösserer Sendeleistung auf das Lesegerät (2.2) auszustrahlen, wobei die Identifikationssignale (A), falls eine Auspassung der Signale an das Lesegerät (2.2) erforderlich ist, zusätzlich decodiert/codiert und als angepaßte Identifikationssignale (B) zum Lesegerät (2.2) gesendet werden.

2. Verfahren nach Anspruch 1, **dadurch gekennzeichnet**, dass der Identifikationsträger (1.1) und das Zwischengerät als Relaisstation (3) zusammen ein frei kombinierbares System (1.2) bilden, sodass das kombinierte System (1.2) Identifikations- und Lesegerät-abhängig ist, während der Identifikationsträger (1.1) Lesegerät-unabhängig und die Relaisstation (3) Identifikations-unabhängig ist.

3. Verfahren nach einem der Ansprüche 1 oder 2, **dadurch gekennzeichnet**, dass die Sende-Reichweite der Relaisstation (3) um einen Faktor von mindestens 200 grösser ist als die Sende-Reichweite des normierten Identifikationsträgers (1.1).

4. Verfahren nach einem der Ansprüche 1 bis 3, **dadurch gekennzeichnet**, dass der normierte Identifikationsträger (1.1) eine Chip-tragende Kreditkarte (21) ist.

5. Verfahren nach einem der Ansprüche 1 bis 3, **dadurch gekennzeichnet**, dass der normierte Identifikationsträger (1.1) ein Chip-tragender Schlüssel (30) ist.

6. Relaisstation zur Durchführung des Verfahrens zur Erweiterung der Reichweite und der Anwendungsmöglichkeiten der kontaktlosen Identifikationsübertragung von normierten Identifikationsträgern auf entsprechende Lesegeräte gemäss den Ansprüchen 1 bis 5, wobei sie elektronische Schaltungen (24), zum Lesen und Decodieren/Codieren von Identifikationssignalen (A) des normierten Identifikationsträgers (1.1) und zum Senden von verstärkten Identifikationssignalen (B) eine Stromquelle (25) und eine Antenne (26) umfasst und dass sie Befestigungsmittel aufweist, mit deren Hilfe der normierte Identfikationsträger derart daran auswechselbar befestigt werden kann, dass der Abstand zwischen der Leseelektronik der Relaisstation (3) und der sendenden Elektronik des Identifikationsträgers (1.1) kleiner ist als die Sende-Reichweite des Lektoren.

7. Relaisstation nach Anspruch 6, **dadurch gekennzeichnet**, dass sie Befestigungsmittel (22) für eine normierte Chip-tragende Kreditkarte (21) umfasst.

8. Relaisstation nach Anspruch 6, **dadurch gekennzeichnet**, dass sie Befestigungsmittel (32) für einen normierten, Chip-tragenden Schlüssel (30) umfasst.

9. Relaisstation nach Anspruch 6, **dadurch gekennzeichnet**, dass sie Befestigungsmittel für eine normierte Kreditkarte (21) und für einen normierten Schlüssel (30) umfasst.

10. Relaisstation nach einem der Ansprüche 6 bis 8, **dadurch gekennzeichnet**, dass sie als Stromquelle eine Batterie enthält.

11. Relaisstation nach einem der Ansprüche 6 bis 8, **dadurch gekennzeichnet**, dass sie als Stromquelle eine Sonnenzelle enthält.

## Claims

1. Method for extending the range and use possibilities of contactless identification transmission of standard, short range identification carriers (1.1) to a reader (2.2), in which the short range identification signals (A) emitted by the standardized identification carrier (1.1) are fed into an intermediate device (3) and amplified so that, for attaining an extended range they are emitted with a higher transmission capacity to the reader (2.2) and the identification signals (A), if an adaptation of the signals to the reader (2.2) is necessary, are additionally decoded/coded and transmitted to the reader (2.2) as adapted identification signals (B).

2. Method according to claim 1, characterized in that the identification carrier (1.1) and the intermediate device as relay station (3) together form a freely combinable system (1.2), so that the combined system (1.2) is dependent on the identification and reader, whilst the identification carrier (1.1) is reader-independent and the relay station (3) identification-independent.

3. Method according to one of the claims 1 or 2, characterized in that the transmission range of the relay station (3) is greater by a factor of at least 200 than the transmission range of the standardized identification carrier (1.1).

4. Method according to one of the claims 1 to 3, characterized in that the standardized identification carrier (1.1) is a chip-carrying credit card (21).

5. Method according to one of the claims 1 to 3, characterized in that the standardized identification carrier (1.1) is a chip-carrying key (30).

6. Relay station for performing the method for extending the range and use possibilities of contactless identification transmission of standardized identification carriers to corresponding readers according to claims 1 to 5, in which it incorporates electronic circuits for reading and decoding/coding identification signals (A) of the standardized identification carrier (1.1) and for transmitting amplified identification signals (B), a power supply (25) and an antenna (26) and that it has fastening means with the aid of which the standardized identification carrier can be fastened in interchangeable manner so that the distance between the reading electronics of the relay station (3) and the transmitting electronics of the identification carrier (1.1) is smaller than the transmission range of the latter.

7. Relay station according to claim 6, characterized in that it has fastening means (22) for a standardized chip-carrying credit card (21).

8. Relay station according to claim 6, characterized in that it has fastening means (32) for a standardized chip-carrying key (30).

9. Relay station according to claim 6, characterized in that it has fastening means for a standardized credit card (21) and for a standardized key (30).

10. Relay station according to one of the claims 6 to 8, characterized in that it contains a battery as the power supply.

11. Relay station according to one of the claims 6 to 8, characterized in that it contains a solar cell as the power supply.

## Revendications

1. Procédé pour l'extension de la portée et des possibilités d'utilisation de la transmission d'identification sans contact de supports d'identification (1.1) normalisés de courte portée à un appareil de lecture (2.2), dans lequel les signaux d'identification A de courte portée émis par le support d'identification (1.1) normalisé sont envoyés et renforcés dans un appareil intermédiaire (3) pour les diffuser au lecteur (2.2) afin d'obtenir une portée étendue avec une plus grande puissance d'émission, les signaux d'identification (A), au cas où une adaptation des signaux au lecteur (2.2) est nécessaire, étant en outre décodés/codés et envoyés au lecteur (2.2) comme signaux d'identification (B).

2. Procédé suivant la revendication 1, caractérisé en ce que le support d'identification (1.1) et l'appareil intermédiaire en tant que station relais (3) constituent ensemble un système (1.2) librement combinable, de sorte que le système combiné (1.2) est dépendant de l'appareil d'identification et du lecteur, tandis que le support d'identification (1.1) est indépendant du lecteur et que la station relais (3) est indépendante de l'identification.

3. Procédé suivant l'une des revendications 1 ou 2, caractérisé en ce que la portée d'émission de la station relais (3) est supérieure d'un facteur d'au moins 200 à la portée d'émission du support d'identification (1.1) normalisé.

4. Procédé suivant l'une des revendications 1 à 3, caractérisé en ce que le support d'identification (1.1) normalisé est une carte de crédit (21) portant une puce.

5. Procédé suivant l'une des revendications 1 à 3, caractérisé en ce que le support d'identification (11) normalisé est une clé (30) portant une puce.

6. Station relais pour exécuter le procédé d'extension de la portée et des possibilités d'utilisation de la transmission sans contact d'identification de supports d'identification normalisés à des lecteurs correspondants suivant les revendications 1 à 5, comprenant des circuits électroniques (24) pour la lecture et le décodage/codage de signaux d'identification (A) du support d'identification (11) normalisé et une source de courant (25) et une antenne (26) pour l'émission de signaux d'identification (B) renforcés, et présentant des moyens de fixation, à l'aide desquels le support d'identification normalisé peut être y fixé de manière interchangeable de telle sorte que l'intervalle compris entre l'équipement électronique de la station relais (3) et l'équipement électronique émetteur du support d'identification (1.1) est plus petit que la portée d'émission de ce dernier.

7. Station relais suivant la revendication 6, caractérisée en ce qu'elle comprend des moyens de fixation (22) pour une carte de crédit (21) normalisée portant une puce.

8. Station relais suivant la revendication 6, caractérisée en ce qu'elle comprend des moyens de fixation (32) pour une clé (30) normalisée portant une puce.

9. Station relais suivant la revendication 6, caractérisée en ce qu'elle comprend des moyens de fixation pour une carte de crédit (21) normalisée et pour une clé (30) normalisée.

10. Station relais suivant l'une des revendications 6 à 8, caractérisée en ce qu'elle contient une batterie comme source de courant.

11. Station relais suivant l'une des revendications 6 à 8, caractérisée en ce qu'elle contient une cellule solaire comme source de courant.
